# EUROPÄISCHE PATENTANMELDUNG

(11) **EP 1 050 471 A2**
(43) Veröffentlichungstag der Anmeldung: **08.11.2000**
(21) Anmeldenummer: 00107829.4
(22) Anmeldetag: 12.04.2000
(51) Int. Cl.: B65B 59/00, B65B 43/52

(54) **Faltschachtelförderer für eine Verpackungsmaschine**

(30) Priorität: 05.05.1999 DE 19920614
(71) Anmelder: IWK Verpackungstechnik GmbH, 76297 Stutensee-Blankenloch (DE)
(72) Erfinder: Hähnel, Bernd, 76297 Stutensee (DE)
(74) Vertreter: Lasch, Hartmut Dipl.-Ing.

(57) **Zusammenfassung**

Eine Verpackungsmaschine weist einen Verpackungsförderer (11), insbesondere einen Faltschachtelförderer, und eine Querschubvorrichtung (12) auf, die einen im wesentlichen senkrecht zur Förderrichtung des Verpackungsförderers verschieblichen Stößel (13) besitzt, mittels dessen eine auf den Verpackungsförderer angeordnete Verpackung (S) senkrecht zur Förderrichtung verlagerbar ist. Dabei sind mehrere Stößel in gleichem gegenseitigem Abstand an einer im wesentlichen parallel zur Förderrichtung des Verpackungsförderers endlos umlaufenden Transportvorrichtung (17) verschieblich gelagert, wobei eine die Verschiebung der Stößel bestimmende Steuerkurve (25a,24,25b) vorgesehen ist, die einen ersten Abschnitt (25a) für die axiale Ausfahrbewegung des Stößels und einen daran anschließenden zweiten Abschnitt (24) für die axiale Einzugsbewegung des Stößels aufweist. Um eine einfache und schnelle Anpassung an das Format der zu verschiebenden Faltschachtel zu ermöglichen, ist zumindest der erste Abschnitt der Steuerkurve von einer verstellbaren Anlagefläche gebildet, an der eine erste Rolle abläuft.

## Beschreibung

Die Erfindung betrifft eine Verpackungsmaschine mit einem Verpackungsförderer, insbesondere einem Faltschachtelförderer, und mit einer Querschubvorrichtung, die einem im wesentlichen senkrecht zur Förderrichtung des Verpackungsförderers verschieblichen Stößel aufweist, mittels dessen eine auf dem Verpackungsförderer angeordnete Verpackung senkrecht zur Förderrichtung verlagerbar ist, wobei der Stößel an einem im wesentlichen parallel zur Förderrichtung des Verpackungsförderers mit gleicher Geschwindigkeit wie dieser endlos umlaufenden Transportvorrichtung verschieblich gelagert ist und wobei eine die Verschiebung des Stößels bestimmende Steuerkurve vorgesehen ist, die einen ersten Abschnitt für die axiale Ausfahrbewegung des Stößels und einen daran anschließenden zweiten Abschnitt für die axiale Einzugsbewegung des Stößels aufweist.

In einer Verpackungsmaschine, mit der Produkte jeweils in einer Faltschachtel verpackt werden sollen, sind üblicherweise ein endlos umlaufender Verpackungsförderer, beispielsweise eine sogenannte Faltschachtelkette, und eine endlos umlaufende Fördervorrichtung für die Produkte, beispielsweise eine sogenannte Produktkette, vorgesehen. Die Faltschachtelkette und die Produktkette sind derart in ihren Bewegungen synchronisiert, daß das Produkt quer zur Bewegungsrichtung der Ketten in die Faltschachtel eingeschoben werden kann.

Vor dem Einschieben der Produkte muß in einem vorhergehenden Arbeitsschritt sichergestellt werden, daß die seitlichen Verschlußlaschen der Faltschachtel auf der Einschubseite des Produktes die Einschubbewegung nicht behindern, was in der Regel dadurch erreicht wird, daß die auf der Faltschachtelkette liegenden Faltschachteln nacheinander mittels eines Stößels einer Querschubvorrichtung quer zur Förderrichtung der Faltschachtelkette verschoben werden, wodurch die auf der Einschubseite des Produktes liegenden seitlichen Verschlußlaschen auf Führungsanschläge auflaufen und von diesen seitlich weggeweicht werden. Da die Faltschachtel während der Querverlagerung aufgrund der noch offenen seitlichen Verschlußlaschen eine relativ geringe räumliche Stabilität aufweist, muß der Stößel mit hoher Präzision mit der Faltschachtel in Anlage gebracht werden. Die Abstimmung der axialen Ausfahr- und Einzugbewegung des Stößels mit der quer dazu verlaufenden Förderbewegung der zu verschiebenden Faltschachtel ist sehr schwierig und führt in der Praxis häufig zu Problemen.

Nachdem eine Faltschachtel mittels des Stößels quer verlagert wurde, kehrt der Stößel in seine eingezogene Ausgangsstellung zurück, aus der er dann zur Querverlagerung der nächsten Faltschachtel wieder ausgefahren wird. Diese Hin- und Herbewegung des Stößels benötigt relativ viel Zeit und begrenzt die Taktfrequenz und somit die Arbeitsleistung der Verpackungsmaschine wesentlich.

Aus der US 4 159 610 ist es bekannt, daß der Stößel an einer im wesentlichen parallel zur Fördervorrichtung des Verpackungsförderers endlos umlaufenden Transportvorrichtung in Form von Ketten verschieblich gelagert ist, die in regelmäßigen Abständen querverlaufende Rinnenteile trägt, in denen als Stößel wirkende Querschubelemente verschieblich aufgenommen sind. Jeder Stößel besitzt eine Rolle, die in einer Führungsschiene verläuft, die eine die Verschiebung des Stößels bestimmende Steuerkurve bildet. Dabei führt der Stößel somit nicht nur eine senkrecht zur Fördervorrichtung gerichtete Ausschub- bzw. Ausfahrbewegung und eine entsprechend entgegengesetzte Einzugbewegung aus, sondern der Stößel wird mit der Transportvorrichtung abschnittsweise parallel zu dem Verpackungsförderer in Förderrichtung verschoben, wobei die Transportvorrichtung und der Verpackungsförderer vorzugsweise mit gleicher Geschwindigkeit bewegt werden, so daß zwischen dem Stößel und der Verpackung keine Relativverschiebung in Förderrichtung auftritt, solange der Stößel mit der Transportvorrichtung parallel zu dem Verpackungsförderer bewegt wird. Während der Bewegung in Förderrichtung greift der Stößel die Steuerkurve ab, die die Axialverschiebung, d.h. die Ausfahrbewegung und die Einzugbewegung des Stößels bestimmt.

Am Ende der endlos umlaufenden Transportvorrichung kehrt der Stößel in Gegenrichtung zur Förderrichtung des Verpackungsförderers in die Ausgangslage zurück und kann somit eine Querverlagerung einer weiteren Verpackung auf dem Verpackungsförderer einleiten.

Dabei ist vorgesehen, daß die Transportvorrichtung ein Zabnriemen oder eine Kette ist, der bzw. die außenseitig ein Führungsteil für den Stößel trägt, in dem dieser axial verschieblich aufgenommen ist.

Die Ausgestaltung der Transportvorrichtung als parallel zum Verpackungsförderer verlaufendem Endlosband oder -riemen ermöglicht es, an diesem bzw. der Transportvorrichtung mehrere Führungsteile für jeweils einen Stößel in gleichem gegenseitigem Abstand anzubringen, wodurch die Arbeitsleistung der Verpackungsmaschine erhöht ist.

Die die axiale Verstellung bzw. Verschiebung des Stößels definierende Steuerkurve weist einen ersten Abschnitt für die axiale Ausfahrbewegung des Stößels und einen daran anschließenden zweiten Abschnitt für die axiale Einzugsbewegung des Stößels auf, die jeweils von einem Abschnitt der Führungsschiene gebildet sind. Um die axiale Ausfahrbewegung des Stößels auf ein geändertes Format der zu verschiebenenden Faltschachtel umzustellen, muß die gesamte Führungsschiene ausgebaut und ausgetausch werden. Auf diese Weise ist die Formatumstellung zeitaufwendung und kostenintensiv.

Der Erfindung liegt die Aufgabe zugrunde, eine Querschubvorrichtung in einer Verpackungsmaschine der genannten Art zu schaffen, die eine einfache und schnelle Anpassung an das Format der zu verschiebenden Faltschachtel ermöglicht.

Diese Aufgabe wird bei einer Verpackungsmaschine der genannten Art dadurch gelöst, daß zumindest der erste Abschnitt der Steuerkurve von einer verstellbaren Anlagefläche gebildet ist, an der eine erste Rolle abläuft. Auf diese Weise ist es möglich, die Ausgangsstellung des Stößels und/oder dessen axiale Ausfahrbewegung entsprechend dem Format der zu verschiebenden Faltschachteln anzupassen.

Eine einfache Verstellung des ersten Abschnitts der Steuerkurve läßt sich erzielen, wenn die verstellbare Anlagefläche von einem elastisch verformbaren Federstahlblech gebildet ist.

Der zweite Abschnitt der Steuerkurve, der die axiale Einzugbewegung des Stößels bestimmt, bedarf in der Regel keiner Anpassung an die jeweilige Faltschachtelgröße, so daß vorzugsweise vorgesehen ist, daß dieser zweite Abschnitt von einer feststehenden Führung insbesondere in Form einer Führungsnut gebildet ist, in der die erste Rolle abläuft.

Zwischen dem von dem Federstahlblech gebildeten ersten Abschnitt der Steuerkurve und dem von der Führungsnut gebildeten zweiten Abschnitt der Steuerkurve muß stets ein glatter, stufenloser Übergang gewährleistet sein. Dies wird erfindungsgemäß dadurch erreicht, daß das Federstahlblech im Übergangsbereich zwischen dem ersten Abschnitt und dem zweiten Abschnitt der Steuerkurve fest gehalten ist, so daß die Oberfläche des Federstahlblechs immer glatt in eine Wandung der Führungsnut übergeht, auch wenn das Federstahlblech verstellt wird, wobei aus der Verstellung des Federstahlblechs resultierende axiale Bewegungen aufgenommen werden kennen. Die Verstellung des Federstahlblechs wird insbesondere dadurch erreicht, daß der dem festgehaltenen Ende entgegengesetzt liegende Anfangsbereich des ersten Abschnitts der Steuerkurve an einem in Axialrichtung des Stößels verstellbaren Halter gelagert ist.

Wenn der Halter in Axialrichtung des Stößels verstellt werden, wird damit auch der Anfangsbereich des ersten Abschnitts der Steuerkurve, d.h. des Federstahlblechs verändert, was zu einer Verformung des Federstahlblechs führt, da dieses an seinem anderen Ende fest gehalten ist. Auf diese Weise ist jedoch in jeder Verstellage eine kontinuierliche Anlagefläche im ersten Abschnitt der Steuerkurve gewährleistet.

Die Ausfahrbewegung und die Einzugbewegung des Stößels wird vorzugsweise über den ersten und zweiten Abschnitt der Steuerkurve ausgeführt, wenn der Stößel sich im Bereich des Obertrums der endlos umlaufenden Transportvorrichtung befindet. Am Ende der Einzugbewegung befindet sich der Stößel am Ende des Obertrums der Transportvorrichtung, wird bei weiterer Bewegung umgelenkt und läuft über das Untertrum wieder zum Beginn des Obertrums zurück. Während dieser Rückführbewegung im Bereich des Untertrums ist der Stößel in einem dritten Abschnitt der Steuerkurve gesteuert, der die Führung des Stößels während der Rückführung der umlaufenden Transportvorrichtung übernimmt. Vorzugsweise ist dieser dritte Abschnitt ebenfalls an dem Federstahlblech ausgebildet, so daß im Übergang vom Untertrum zum Obertrum eine kontinuierliche Anlagefläche an dem einheitlichen Federstahlblech gegeben ist. Um auch zwischen der den zweiten Abschnitt der Steuerkurve bildenden Führungsnut und dem daran anschließenden, von dem Federstahlblech gebildeten dritten Abschnitt der Steuerkurve eine sichere Halterung des Federstahlblechs zu erzielen, ist dieses in dem genannten Übergangsbereich festgehalten bzw. eingespannt, während der dritte Abschnitt in seinem entgegengesetzten Endbereich an dem Halter gelagert ist. Dabei ist vorzugsweise vorgesehen, daß der dritte Abschnitt der Steuerkurve glatt in deren ersten Abschnitt übergeht.

Es hat sich als vorteilhaft erwiesen, für das Abgreifen der Steuerkurve während der Ausfahrbewegung des Stößels und während der Rückführung der umlaufenden Transportvorrichtung zwei Rollen zu verwenden. Dabei ist erfindungsgemäß insbesondere vorgesehen, daß die erste Rolle die Steuerkurve in deren ersten und dritten Abschnitt auf der einen Seite des Federstahlblechs und eine zweite Rolle auf der entgegengesetzten Seite des Federstahlblechs abgreift. Auf diese Weise ist die axiale Verschiebung bzw. Position des Stößel zuverlässig definiert. In dem zweiten Abschnitt der Steuerkurve, d.h. in der Führungsnut ist nur ein Eingreifen der ersten Rolle vorgesehen, wodurch die axiale Verstellbewegung des Stößels präzise definiert ist.

Dabei ist vorzugsweise vorgesehen, daß die Transportvorrichtung ein Zahnriemen ist, der außenseitig ein Führungsteil für den Stößel trägt, und mehrere Stößel in gleichem gegenseitigem Abstand aufweist.

Weitere Einzelheiten und Merkmale der Erfindung sind aus der folgenden Beschreibung eines Ausführungsbeispiels unter Bezugnahme auf die beigefügte Zeichnung ersichtlich. Es zeigen:
- Figur 1: eine Aufsicht auf eine erfindungsgemäße Querschubvorrichtung einer Verpackungsmaschine und
- Figur 2: eine Seitenansicht einer erfindungsgemäßen Querschubvorrichtung.

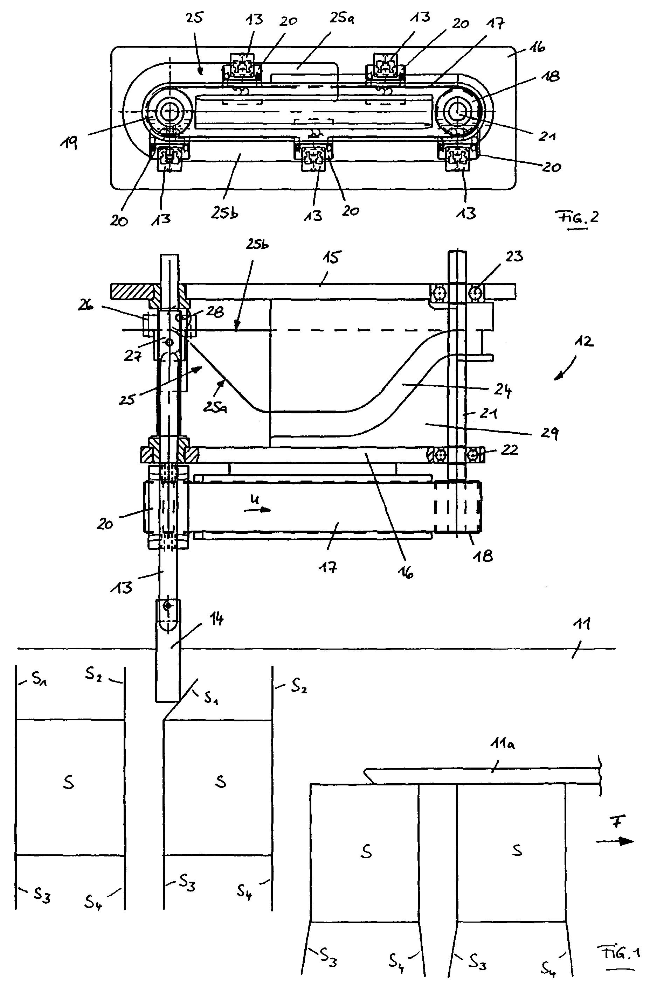

Eine in den Figuren 1 und 2 ausschnittsweise dargestellte Verpackungsmaschine besitzt in herkömmlicher Weise einen Faltschachtelförderer 11, der in Fördervorrichtung F angetrieben ist und auf seiner Oberseite eine Vielzahl von Faltschachteln S trägt, die mit ihren offenen Seiten, denen jeweils seitliche Verschlußlaschen S1, S2 bzw. S3, S4 zugeordnet sind, quer zur Förderrichtung F ausgerichtet sind. In jede Faltschachtel S wird von der gemäß Figur 1 unteren Seite ein nicht dargestelltes Produkt eingeführt, wobei vorher sichergestellt werden muß, daß die auf der Produkt-Einführseite liegenden seitlichen Verschlußlaschen S3 und S4 zur Freigabe der Einführöffnung seitlich nach außen gespreizt oder weggeweicht werden. Dies wird mittels einer Querschubvorrichtung 12 erreicht, die auf der der Produkt-Einführseite abgewandten Seite des Faltschachtelförderers 11 angeordnet ist und mit der die Faltschachteln nacheinander quer zur Förderrichtung F verschoben werden, wodurch die seitlichen Verschlußlaschen F3 und F4 durch Anlage an nicht dargestellten Anschlägen seitlich nach außen abgelenkt werden.

Die Querschubvorrichtung 12 umfaßt eine endlos umlaufende Transportvorrichtung in Form eines über zwei beabstandete Umlenkrollen 18, 19 geführten Zahnriemens 17, der parallel zu dem Faltschachtelföderer 11 verläuft. Die eine Umlenkrolle 18 ist mit einer Antriebswelle 21 verbunden, die in beabstandeten Lagerplatten 15, 16 über Lager 22, 23 drehbar gelagert ist und in nicht dargestellter Weise angetrieben ist. Der Zahnriemen 17 ist in Richtung U derart angetrieben, daß das Obertrum synchron zum Faltschachtelförderer 11 in Förderrichtung F bewegt wird, während das Untertrum in Gegenrichtung läuft.

Auf der Außenseite des Zahnriemens 17 sind in gleichem gegenseitigem Abstand fünf Halter 20 montiert (siehe Fig. 2), von denen in Figur 1 aus Gründen der Übersichtlichkeit nur einer dargestellt ist. Die Halter 20 laufen mit dem Zahnriemen 17 um und lagern jeweils einen Stößel 13 derart, daß dieser axial, d.h. senkrecht zur Laufrichtung U des Zahnriemens 17 und somit senkrecht zur Förderrichtung F des Faltschachtelförderers 11 verschieblich ist. Der Stößel 13 trägt an seinem vorderen, dem Faltschachtelförderer 11 zugewandten Ende ein Polster 14, mit dem er mit den Faltschachteln S in Anlage tritt.

Am hinteren Ende jedes Stößels 13 sind eine erste Rolle 27 und eine zweite Rolle 28 drehbar gelagert, die in später beschriebener Weise an einer Steuerkurve abrollen und dadurch die axiale Ausfahrbewegung des Stößels 13 in Richtung der Faltschachteln S und dessen axiale Einzugsbewegung steuern. Die Steuerkurve umfaßt einen ersten Abschnitt für die axiale Ausfahrbewegung des Stößels 13, einen daran anschließenden zweiten Abschnitt für die axiale Einzugbewegung des Stößels und einen dritten Abschnitt für die Führung des Stößels während der Rückführung des zugeordneten Halters 20 im Bereich des Untertrums des Zahnriemens 17. Der zweite Abschnitt der Steuerkurve ist von einer in einer Platte 29 ausgebildeten Führungsnut 24 gebildet, in der die erste Rolle 27 unter enger Passung verfahrbar ist. Die Führungsnut 24 verläuft von einer dem Zahnriemen 17 nahen Position an ihrem vorderen Ende zu einer von dem Zahnriemen 17 weiter entfernten Position an ihrem hinteren Ende, wodurch die erste Rolle 27 beim Durchlaufen der Führungsnut 24 von dem Zahnriemen 17 wegbewegt und der Stößel 13 eingezogen wird.

Der erste Abschnitt und der dritte Abschnitt der Steuerkurve sind von einem im wesentlichen U-förmigen Federstahlblech 25 gebildet, wobei die beiden U-Schenkel unterschiedliche Länge besitzen. Das vordere Ende des kürzeren U-Schenkels 25 ist derart in der Platte 29 fest gehalten, daß ein glatter, stufenloser Übergang zwischen der Oberflächen des U-Schenkels 25a und der Wandung der Führungsnut 24 gebildet ist. Der U-Schenkel 25a verläuft dabei von einer vom Tragriemen 17 zurückgesetzten Position schräg bis zu dem Übergang in die Führungsnut 24, so daß die erste Rolle 27, die auf der dem Stößel 13 zugewandten Seite an dem U-Schenkel 25a anliegt, und die zweite Rolle 28, die auf der entgegengesetzten Seite des U-Schenkels 25a anliegt, in Richtung des Tragriemens 17 verschoben werden, wenn sie den den ersten Abschnitt der Steuerkurve bildenden U-Schenkel 25a des Federstahlblechs 25 entlangrollen, wodurch der Stößel 13 in Richtung der Faltschachteln S des Faltschachtelförderers 11 ausgefahren wird.

Das freie Ende des längeren U-Schenkels 25b des Federstahlblechs 25 ist im Bereich des Endes der Führungsnut 24 fest gehalten. Der die beiden U-Schenkel 25a und 25b verbindende Umlenk- bzw. Basisabschnitt des Federstahlbleche 25 ist an einem Halter 26 montiert, der in Bewegungsrichtung des Stößels 13 verstellbar ist, was zu einer Verstellung der Steuerkurve unter Verformung des Federstahlblechs 25 führt. Der Zahnriemen 17 und der Faltschachtelförderer 11 sind im wesentlichen mit gleicher Geschwindigkeit gleichgerichtet angetrieben. Bei der Bewegung des Tragriemens 17 und somit des Halters 20 in Laufrichtung U werden die erste Rolle 27 und die zweite Rolle 28 an dem schräg verlaufenden, den ersten Abschnitt der Steuerkurve bildenden U-Schenkel 25a des Federstahlbleche 25 entlanggeführt, wodurch der Stößel 13 in Richtung der auf dem Faltschachtelförderer 11 befindlichen Faltschachtel S ausgefahren wird. Der Stößel 13 kommt mit seinem Polster 14 mit der nachlaufenden seitlichen Verschlußlasche S1 in Anlage und drückt diese in ihre Verschlußstellung herunter, wie in Figur 1 angedeutet ist. Bei einer weiteren axialen Ausfahrbewegung des Stößels 13 wird die Faltschachtel S senkrecht zur Förderrichtung F auf dem Faltschachtelförderer 11 verschoben, wodurch die dem Stößel 13 abgewandten seitlichen Verschlußlaschen S3 und S4 durch Anlage an nicht dargestellten Anschlägen seitlich nach außen abgelenkt werden. Die Faltschachtel S wird gemäß Figur 1 soweit auf dem Faltschachtelförderer 11 nach unten verschoben, daß die der Querschubeinrichtung zugewandten seitlichen Verschlußlaschen S1 und S2 unter eine Führungsleiste 11a tauchen und dadurch in bekannter Weise in ihrer geschlossenen Stellung gehalten werden. Die Führungsleiste 11a dient auch als Abstützung bei dem nicht dargestellten Einschieben des Produktes auf der entgegengesetzten Seite der Faltschachtel 1.

Am Ende des durch den U-Schenkel 25a des Federstahlblechs 25 definierten ersten Abschnitt der Steuerkurve tritt die erste Rolle 27 in die Führungsnut 24 der Platte 29 ein, wodurch der Stößel 13 bei weiterer Bewegung des Zahnriemens 17 und somit des Halters 20 in Laufrichtung U wieder eingezogen wird, wobei er am Ende der Führungsnut 24 seine maximal eingezogene Stellung erreicht hat. Dies entspricht dem Ende des Obertrums des umlaufenden Zahnriemens 17. Der Halter 20 wird dann mit dem Zahnriemen 17 um die Umlenkrolle 18 herum nach unten in den Bereich des Untertrums umgelenkt und läuft an diesem entgegen der Förderrichtung F zurück, wobei der Stößel 13 bei dieser Bewegung entlang dem Untertrum des Zahnriemens 17 mit seiner ersten Rolle 27 auf der vorderen Oberfläche und mit seiner zweiten Rolle 28 auf der rückseitigen Oberfläche des längeren U-Schenkels 25b des Federstahlblechs 25 in Anlage steht und dadurch an einer unerwünschten Axialverschiebung gehindert ist. Am Ende des Untertrums des Zahnriemens 17 geht der lange U-Schenkel 25a über den Umlenk- bzw. Basisbereich des Federstahlblechs 25 kontinuierlich in den anderen U-Schenkel 25a über, was mit der Umlenkung an der Umlenkrolle 19 zwischen dem Untertrum und dem Obertrum des Zahnriemens 17 einhergeht, wodurch der Halter 20 wieder am Beginn des ersten Abschnitts der Steuerkurve steht, wie es in Figur 1 gezeigt ist.

Wenn gemäß Figur 2 fünf Halter 20 mit jeweils zugeordnetem Stößel 13 auf der Außenseite des Tragriemens 17 montiert sind, kann in der Verpackungsmaschine eine wesentlich höhere Taktzahl erreicht werden, als wenn in herkömmlicher Weise ein einzelner Stößel linear hin- und herbewegt wird.

## Patentansprüche

1. Verpackungsmaschine mit einem Verpackungsförderer (11), insbesondere einem Faltschachtelförderer, und mit einer Querschubvorrichtung (12), die einen im wesentlichen senkrecht zur Fördervorrichtung (F) des Verpackungsförderers (11) verschieblichen Stößel (13) aufweist, mittels dessen eine auf dem Verpackungsförderer (11) angeordnete Verpackung (S) senkrecht zur Förderrichtung (F) verlagerbar ist, wobei der Stößel (13) an einer im wesentlichen parallel zur Förderrichtung (F) des Verpackungsförderers (11) mit gleicher Geschwindigkeit wie dieser endlos umlaufenden Transportvorrichtung (17) verschieblich gelagert ist und wobei eine die Verschiebung des Stößels (13) bestimmende Steuerkurve (25a, 24, 25b) vorgesehen ist, die einen ersten Abschnitt (25a) für die axiale Ausfahrbewegung des Stößels (13) und einen daran anschließenden zweiten Abschnitt (24) für die axiale Einzugsbewegung des Stößels aufweist, dadurch gekennzeichnet, daß zumindest der erste Abschnitt (25a) der Steuerkurve von einer verstellbaren Anlagefläche gebildet ist, an der eine erste Rolle (27) abläuft.

2. Verpackungsmaschine nach Anspruch 1, dadurch gekennzeichnet, daß die verstellbare Anlagefläche von einem elastisch verformbaren Federstahlblech (25) gebildet ist.

3. Verpackungsmaschine nach Anspruch 1 oder 2, dadurch gekennzeichnet, daß der zweite Abschnitt (24) von einer feststehenden Führung, insbesondere einer Führungsnut (24) gebildet ist.

4. Verpackungsmaschine nach Anspruch 2 oder 3, dadurch gekennzeichnet, daß das Federstahlblech (25) im Übergangsbereich zwischen dem ersten Abschnitt (25a) und dem zweiten Abschnitt (24) der Steuerkurve fest eingespannt und im entgegengesetzten Anfangsbereich des ersten Abschnitts (25a) an einem in Bewegungsrichtung des Stößels (13) verstellbaren Halter (26) gelagert ist.

5. Verpackungsmaschine nach einem der Ansprüche 1 bis 4, dadurch gekennzeichnet, daß die Steuerkurve einen dritten Abschnitt (25b) für die Führung des Stößels (13) während der Rückführung der umlaufenden Transportvorrichtung (17) aufweist.

6. Verpackungsmaschine nach Anspruch 5, dadurch gekennzeichnet, daß der dritte Abschnitt (25b) ebenfalls an dem Federstahlblech ausgebildet ist.

7. Verpackungsmaschine nach Anspruch 6, dadurch gekennzeichnet, daß das Federstahlblech (25) im Übergangsbereich zwischen dem zweiten Abschnitt (24) und dem dritten Abschnitt (25b) der Steuerkurve fest eingespannt und im entgegengesetzten Endbereich des dritten Abschnitts an dem Halter (26) gelagert ist.

8. Verpackungsmaschine nach Anspruch 6 oder 7, dadurch gekennzeichnet, daß der dritte Abschnitt (25b) der Steuerkurve glatt in deren ersten Abschnitt (25a) übergeht.

9. Verpackungsmaschine nach einem der Ansprüche 1 bis 8, dadurch gekennzeichnet, daß die erste Rolle (27) die Steuerkurve nur in deren ersten (25a) und zweiten Abschnitt (24) abgreift und daß eine zweite Rolle (28) vorgesehen ist, die den dritten Abschnitt (25b) der Steuerkurve abgreift.

10. Verpackungsmaschine nach einem der Ansprüche 1 bis 9, dadurch gekennzeichnet, daß die Transportvorrichtung ein Zahnriemen (17) ist, der außenseitig ein Führungsteil (20) für den Stößel (13) trägt.

11. Verpackungsmaschine nach einem der Ansprüche 1 bis 10, dadurch gekennzeichnet, daß die Transportvorrichtung (17) mehrere Stößel (13) in gleichem gegenseitigem Abstand trägt.
